# EUROPEAN PATENT SPECIFICATION

(11) **EP 3 188 084 B1**
(45) Date of publication and mention of the grant of the patent: **07.04.2021**
(21) Application number: 16206842.3
(22) Date of filing: 23.12.2016
(51) Int. Cl.: G06K 19/07, G06K 7/10

(54) **SELF-RECONFIGURABLE ANTENNA AND SELF-STEERING RFID TAGS**
SELBSTREKONFIGURIERBARE ANTENNE UND SELBSTLENKENDE RFID-ETIKETTEN
ANTENNE AUTO RECONFIGURABLE ET BALISES RFID AUTOGUIDÉES

(30) Priority: 31.12.2015 US 201514985634; 31.12.2015 US 201514985672
(43) Date of publication of application: 05.07.2017
(73) Proprietor: Intermec, Inc., Lynwood, WA 98087 (US)
(72) Inventor: NIKITIN, Pavel, Morris Plains, NJ 07950 (US); KELLY, Stephen J., Morris Plains, NJ 07950 (US)
(74) Representative: Haseltine Lake Kempner LLP

(56) References cited:
- US-A1- 2007 279 225
- US-A1- 2012 062 366
- US-A1- 2015 091 706

## Description

### BACKGROUND

Smart antennas and reconfigurable antennas have been used in applications for wireless network communications including communications via radio-frequency identification (RFID) tags and Wi-Fi and provide many beneficial features. However, they are overly complex and expensive to make and use. Smart antennas, which are also known as adaptive array antennas and multiple-input multiple-output (MIMO) antennas, are highly adaptable devices that use complex algorithms and modifiable antenna configurations to communicate effectively on a wireless network. However, these highly adaptable devices require external variable power to support their adaptable configurations, which include changing their antenna configurations, performance and other parameters as needed.

Smart antennas also operate with phase distribution system controls that manage a phased array of antenna devices cooperating with each other to steer radio beams and adapt to network parameters as needed for effective network communications. However, such networks and devices are expensive. Further, they are complicated to design, manage and maintain due to the multiple changeable components required in the antenna devices, not to mention due to the complexity of their control mechanisms that ensure coordinated control of the antenna elements, as well as their need for external variable power requirements.

Reconfigurable antennas likewise include modifiable elements that permit antenna configuration changes to be made, but the antenna device itself in these systems is more compact than with smart antennas. Similar to smart antennas, reconfigurable antennas can be electronically switched as needed to enable and disable communications and modify antenna parameters. Conventional reconfigurable antennas include variable resistors in the form of PIN diodes and small switches in the form of micro-electro-mechanical system (MEMS) switches, which are controlled to modify the antenna configurations.

Both smart and reconfigurable conventional antennas require external variable power supplies and DC bias lines in order to provide power for changing their configurations, as well as for supporting their complex logic elements and control mechanisms. Both of these conventional antenna systems also require complex circuitry and support features, such as fiber optic lines, DC biased RF feeds, and other complex circuitry components. As such, conventional smart and reconfigurable conventional antennas require complicated antenna designs, complex controls and elaborate control logic for managing the devices, as well as external variable power supplies to enable their operation.

Implementations of RFID tags have included smart and reconfigurable antenna technologies for various purposes included enabling devices to create ad-hoc mesh networks based on tag-to-tag network communications. These systems are used in a many industries for various purposes including indoor and outdoor environments. The tag-to-tag network communications can allow an ad hoc, robust wireless network to be quickly created with minimal infrastructure requirements.

The use of RFID tags for creating ad hoc networks or for other implementations, involving tag-to-tag communications have primarily been limited to active RFID tags. This is because active RFID tags are generally more adaptable allowing them to change communication parameters quickly and more easily than passive tags, and because they can communicate between each other at much greater distances than passive RFID tags. For example, active RFID tag communication distances may be on the order of several hundred feet between tags versus about a foot or so between passive RFID tags. However, the cost of active RFID tags is considerably higher than passive RFID tags, which can often prohibit their usage.

US2007/279225A1 discloses a radio frequency identification (RFID) system that uses passive RFID tags that harvest electrical energy from a received signal and store that harvested electrical energy in a capacitor. The stored electrical energy may then be used to transmit from the RFID tag after the received signal has stopped. In some embodiments, each transmission only represents a single binary bit, but a series of such transmissions may be used to transmit multiple bits.

US2015/091706A1 discloses a method and apparatus for real-time wireless power transfer control. In one embodiment, a system comprises: an RF-energy harvesting sensor tag operable to generate a first backscatter signal and at least one base station operable to deliver RF power to the sensor tag by emitting a first waveform comprising a plurality of subcarriers. The first backscatter signal is generated by the sensor tag by modulated scattering of the first waveform as incident upon the sensor tag, and the at least one base station subsequently emits a second waveform determined at least in part by a closed-loop feedback control algorithm responsive to measurements of the first backscatter signal.

### SUMMARY

The present invention provides a passive, self-reconfigurable antenna device according to claim 1 of the appended claims.

The invention further provides a method carried out at an antenna device for enhancing communications with another antenna device, according to claim 10 of the appended claims.

Various configurations of a passive, self-reconfigurable antenna device and method for operating and controlling the antenna device are provided. The antenna device can include at least one antenna element configured to receive a modulated or an unmodulated wireless signal, a power harvester configured to obtain power from the modulated or unmodulated wireless signal, and a first switch coupled to the power harvester and powered by the obtained power from the power harvester. The first switch can be configured to operate automatically when receiving the obtained power without requiring the receipt of control information. Further, the first switch is configured to automatically switch between operating positions according to a predetermined pattern when receiving the obtained power from the power harvester to modulate the corresponding antenna element.

Also, various configurations of a passive, self-steering antenna device and methods for operating and controlling the antenna device are provided. The antenna device can be configured as a passive RFID tag and can include a first main antenna element configured to receive an unmodulated wireless signal, a power harvester configured to obtain power from the unmodulated wireless signal, a plurality of distributed antenna elements disposed generally about the periphery of the device, and a main switch coupled to the power harvester and powered by the obtained power for activating the antenna device. The antenna device further includes a main circuit disposed generally in a central region of the antenna device, and a control unit configured to select a combination of the plurality of distributed antenna elements to activate, which act to provide a non-symmetric radiation pattern for the antenna device while communicating with another antenna device.

Advantages and features of novelty characterizing aspects of the invention are pointed out with particularity in the appended claims. To gain an improved understanding of advantages and features of novelty, however, reference can be made to the following descriptive matter and accompanying figures that describe and illustrate various configurations and concepts related to the invention.

### BRIEF DESCRIPTION OF THE DRAWINGS

Examples of a reconfigurable antenna device are illustrated in the figures. The examples and figures are illustrative rather than limiting.
Figure 1 shows an example antenna device having features for enabling it to be self-powered and self-reconfigurable without complex control mechanisms or an external variable power supply.
Figure 2A shows another example antenna device with a different configuration than Figure 1.
Figure 2B shows an exemplary circuit for the example antenna device of Figure 1.
Figure 3 illustrates a method for redirecting an antenna radiation pattern of an antenna device based on features of the antenna devices described herein.
Figure 4 shows yet another example antenna device having a different configuration from the devices of Figures 1 and 2.
Figure 5 illustrates a circuit for use with the antenna device of Fig. 4.
Figure 6 shows a comparison of features and benefits provided by the antenna devices discussed along with Figures 1, 2 and 4.
Figure 7 shows an example arrangement 110 of passive, self-steering RFID tags 112 performing operations in a warehouse/transportation environment.
Figure 8 generally illustrates self-steering of the RFID tag's radiation pattern 120 toward RFID reader 116.
Figure 9 shows a method 310 for enhancing communications with another antenna device via modification with its radiation pattern.
Figure 10 shows the passive RFID tag 410 in one configuration.
Figure 11 shows another configuration of a RFID tag 510, configured as a passive RFID tag 112 discussed in relation to Figs 7 and 8.
Figure 12 shows a calculated radiation pattern after steering has been performed via the self-steered RFID tags discussed in relation to Figs 7, 8, 10 and 11.
Figure 13 shows a common Model 710 for a 3-dipole array model representing the RFID tag configurations discussed in relation to Figs 7, 8, 10 and 11.
Figure 14 shows another example of the self-steerable RFID tag 810.
Figure 15 shows a 2-dimensional tag array of neighboring tags configured to "turn" their beams towards each other when talking to each other.

### DETAILED DESCRIPTION OF THE EMBODIMENTS

### SELF-RECONFIGURABLE ANTENNA EMBODIMENT

Described in detail below are example configurations of an antenna device for communicating on a wireless network, which is self-powered and self-reconfigurable, and operates efficiently without requiring complex controls and independent power sources. The antenna device includes a power harvester that obtains power from a wireless signal at the local antenna element and thereafter automatically operates without requiring control inputs or receiving external control data. As such, without needing to receive a control signal or control data, the antenna device is configured to be self-powered and operate as soon as it begins receiving power via the power harvester.

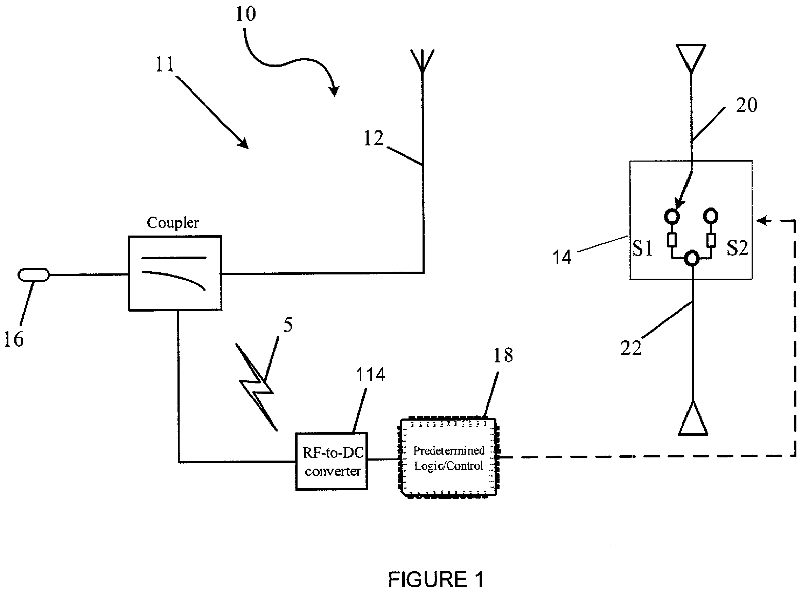

General operation and basic features of a self-powered, self-reconfigurable antenna device, according to one example, not forming part of the claimed invention, is illustrated in Figure 1. Figure 1 shows a central control circuit 11 of an antenna device 10 having a main antenna element 12 (e.g. a dipole) connected with a first switch 14 and an input port 16 of the antenna device. First switch 14 is generally configured as a radio-frequency identification (RF ID) switch 14 that operates as a power harvester 14 to convert RF energy from the wireless, modulated or unmodulated signal 5 received by antenna element 12. First switch 14 is configured to operate automatically when receiving power obtained by the power harvester without requiring reception of control information. As such, the first switch is configured to operate automatically when receiving the obtained power, and to operate to repeatedly turn the antenna device on and off according to a predetermined rate of recurrence.

Antenna device 10 including first switch 14 is coupled to the power harvester and powered by the obtained power of the power harvester 14. Further, antenna device 10 is configured to operate automatically when receiving obtained power from the harvester without requiring the reception of control information. The antenna device 10 further includes a control logic device 18 that controls the switching of switchable elements 20 and 22. The logic part can be as complex as a programmable microcontroller that generates and sends commands to switchable elements 20 and 22, or it can be as simple as a pulse generator driving a counter, which turns switchable elements 20 and 22 on and off in a certain order (e.g., similar to "LED chaser" circuit) or predetermined pattern.

Current low power RF technology already allows one to create RF powered switches that can be turned on and off individually by the control signal. Good examples of such switches are UHF antenna device ICs, which have passive RF sensitivity better than -20 dB and unique IDs. These devices can modulate their input impedance between two values, such as staying in a low impedance state for as long as 25 ms, which is the duration currently dictated by the RFID protocol details and on-chip capacitance standards.

As such, RF switches like RF switch 14 shown in Fig. 1 on the wirelessly reconfigurable antenna can be similar in structure to RFID integrated circuits (ICs). Such switches can be formed as custom ICs or as discrete circuits with low power microcontrollers, similar to configurations for discrete UHF antenna devices.

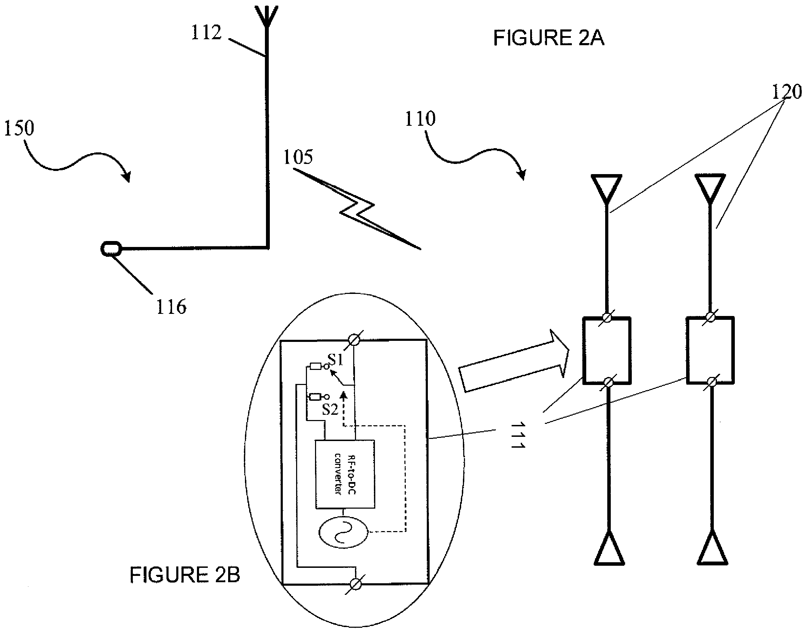

Referring now to Figures 2A and 2B (collectively referred to herein as Figure 2 or Fig. 2), another configuration of an antenna device 150 is shown that can include several distributed, sclf-powcrcd control circuits configured similar to control circuit 111 shown in Fig. 2, but which are each connected with an antenna element 120. Antenna element 120 can be a parasitic element or it can be part of the main antenna element. Such circuits can be set, for example, to different oscillating periods, resulting in the antenna switching between many states.

The switching characteristics of each antenna element 120 are predetermined so the antenna device can begin operating automatically as soon as it receives power. The predetermined switching characteristics can include how often control circuit 111 switches between several beam patterns, which can be fixed or set in advance based on the design of hardware components in the circuit as a predetermined pattern. Although fixed via hardware, these settings can be configured for manual adjustment using, for example, variable capacitors on the circuit that an operator can fine tune as needed. Further, the switching characteristics can also be controlled by the level or intensity of input power received, or the frequency of the modulated or unmodulated wireless signal 105 it receives, which can be achieved by using threshold circuits and/or filters that, depending on the frequency and power of the signal applied to the antenna, change the switching characteristics or the antenna configuration (e.g., its radiation pattern, operating frequency, polarization, etc.). Thus, many predetermined patterns can exist for controlling the switching characteristics depending on variable inputs (e.g., level or intensity of input power received) and predetermined characteristics, such as one or more predetermined patterns that are selected based on variable inputs, such as power level received..

Nonetheless, the switching characteristics and antenna configuration for the antenna device 150 and control circuit 111 are pre-determined operating parameters that are configured prior to operation of the dcvicc. This eliminates the need for the device to receive a control signal and control data in order to determine these parameters, and also eliminates the need for complex control mechanisms to determine and change these parameters, as well as eliminating the need for externally powered mechanisms to enable making configuration changes. As such, antenna device 110 can be formed as an inexpensive, very lower power device, which can nevertheless re-configure itself according to predetermined parameters and patterns. Such reconfiguration operations can be provided via the use of multiple predetermined sets of parameters as noted above that can be selected when the antenna device is used based on variable parameters, such as the frequency of the wireless signal provided, its intensity and/or other parameters. Further, the predetermined sets of parameters and patterns for controlling the same during use can be modified, such as via manual changes to variable hardware components like variable capacitors.

In addition, multiple switching and antenna parameter options can be provided based on the combinations of predetermined parameters occurring during operation of the antenna device. For instance, input port 116, control circuit 111, antenna element 112, and RF-to-DC converter/power harvester 114 shown in Fig. 2 operate similar to input port 16, control circuit 11, antenna element 12 and converter/power harvester 114 shown in Fig. 1. As such, main control circuit 111 cycles between on and off modes during operation according to the resonant frequency of the circuit set by converter/power harvester 114. As such, the antenna devices 10 and 150 can operate under at least two (2) sets of antenna and/or switching parameters simply based on the on/off state of primary switch 14 in the main circuit for the device. The addition of various other switching and antenna parameter options at the switching elements described along with Figure 2, and/or selectable parameter options based on features such as the frequency or intensity of the wireless signal, can provide numerous predetermined operating states based on their combinations. Further, reconfiguration of the antenna device based on combinations of the predetermined parameters can be implemented without requiring a control signal, transmission of control data or complex control components.

In addition, the self-reconfigurable functionality of the antenna devices 10 and 110 are not limited to operational parameters of the devices. For example, visual feedback parameters could also be predetermined according to operating states of the device and pre-integrated into it as additional operating parameters. For instance, visual feedback can be provided that indicates the state of the antenna device, such as having several LEDs mounted on it and being RF-powered from the same circuitry that feeds antenna switching digital logic. These LEDs can be sequentially turned on (e.g., like "chaser lights") to indicate which radiation pattern lobe is currently activated and thus indicate to the user the direction in which the antenna main beam is pointing or other configuration information. This is especially useful for RFID reader antennas regardless whether handheld or fixed.

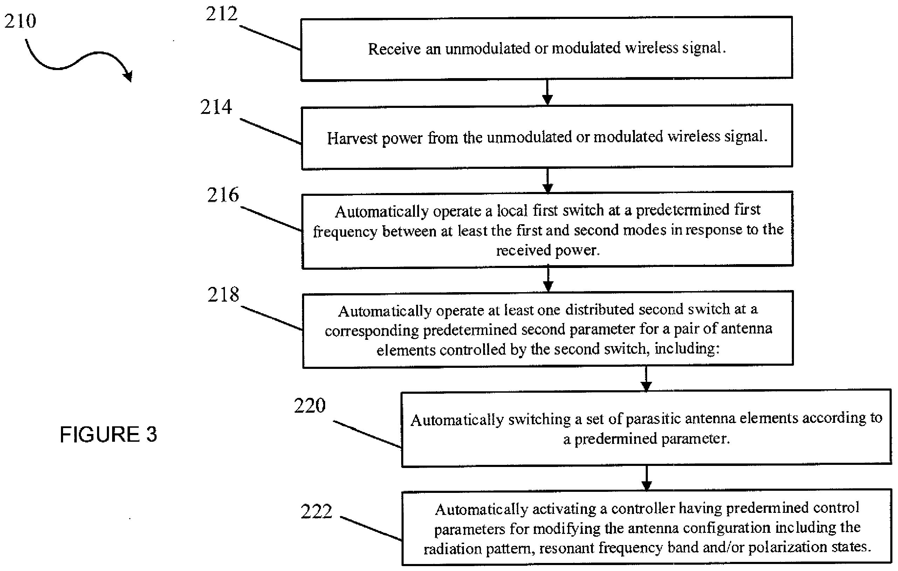

Referring now to Figure 3, a method 210 is generally shown for redirecting an antenna radiation pattern of an antenna device, such as antenna devices 110 and 210 discussed above along with Figs. 1 and 2. As shown in Fig. 3, method 210 includes a step 212 of receiving a modulated or unmodulated wireless signal and a related step 214 of harvesting power from the modulated or unmodulated wireless signal. The method 210 continues with step 216 of automatically operating a local first switch at a predetermined first period between on and off modes in response to receiving power from a wireless signal. Next, method 210 includes the step 218 of automatically operating at least one distributed second switch at a corresponding predetermined second parameter for a pair of antenna elements controlled by the second switch.

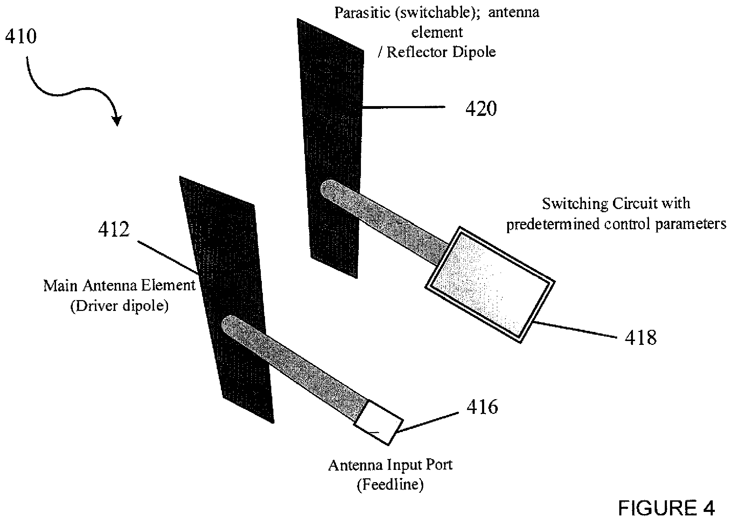

Further, method 210 describes at least three dependent steps for controlling the second switch, which are generally alternative method control steps related to the second step based on the type of antenna elements controlled by the second switch and the manner in which they are controlled. As such, step 220 describes automatically switching a set of parasitic antenna elements according to a predetermined parameter, which would be appropriate for the antenna device shown in Fig. 2. Likewise, step 222 describes automatically activating a controller having predetermined control parameters for modifying the antenna configuration including the radiation pattern, resonant frequency band and/or polarization states, which would be appropriate for the antenna device shown in Figures 4-5 and discussed hereafter.

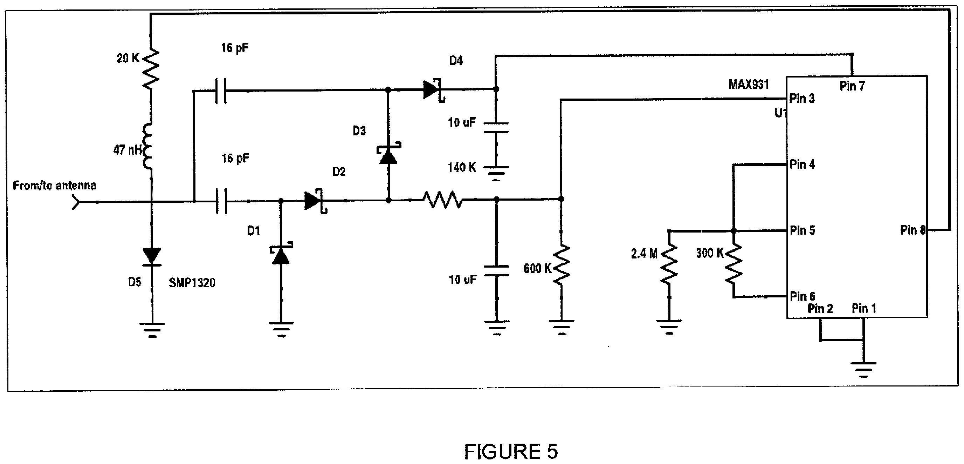

Referring now to Figures 4-5, an implementation of an antenna device 410 is shown in Figure 4 along with a specific circuit diagram in Figure 5 that corresponds to the antenna device of Figure 4. Figures 4-5 show a 950 MHz antenna device having two dipoles including a driver dipole 412 attached to input port 416, and a parasitic element or reflector dipole 420 attached to custom switching circuit 418. The driver dipole is driven by a 20 dBm, 950 MHz unmodulated radio-frequency (RF) constant waveform (CW) source originating from an AGILENT signal generator.

The corresponding circuit schematic is shown in Figure 5, according to one embodiment. As shown in Figures 4-5, the RF-to-DC converter output charges the 10-uF capacitor via 140 K resistor and powers the comparator, set with hysteresis. When the voltage on the capacitor exceeds the threshold, the comparator trips and turns on the PIN diode, which shorts the RF input port and greatly reducing the RF power into RF-to-DC converter. The capacitor starts discharging thereafter, the comparator trips back, and the cycle repeats. Thus this self-powered circuit oscillates and modulates its RF input port (connected to the reflector dipole), which essentially shorts and opens the dipole terminals.

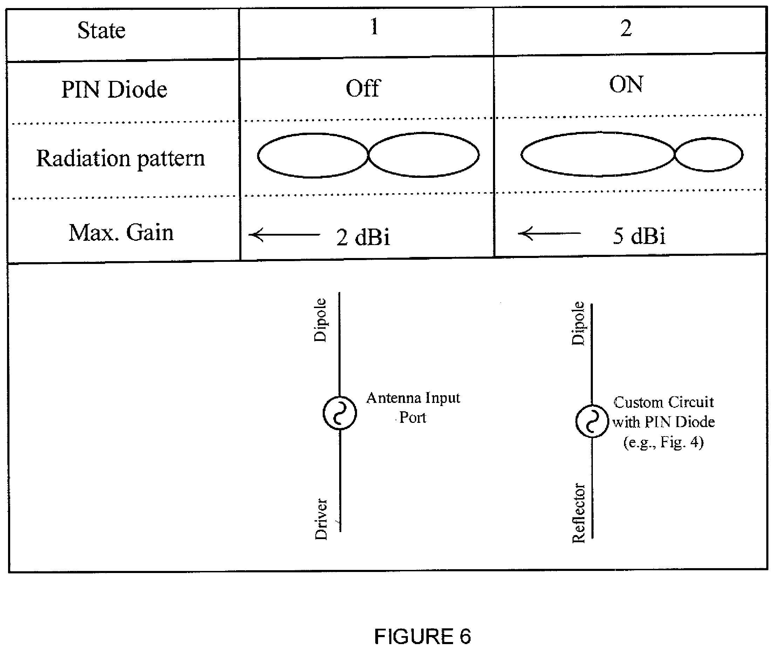

The modulation frequency can be manually changed my modifying the values of the variable resistor and capacitor in the circuit described above. As a result, the antenna radiation pattern switches between two states (two patterns) as shown in Figure 6. Operations of the antenna device 410 and corresponding circuit shown in Figures 4-5 were confirmed via physical observations of a test device corresponding to the antenna device of Figures 4-5. In addition to physical observation of the device during use, operations of a RF power sensor tag with LED sensors confirmed its operations including periodic illumination of LEDs on the test device for the appropriate periods and durations according to anticipated operations of the antenna device.

It is understood that additional antenna elements could be combined with the main first switch and the second switch controlling antenna elements as described above along with Figures 4-5, which could provide antenna devices having even more parameter options during use. For example, a third parasitic antenna element (e.g., a dipole having its own oscillating circuit that oscillates at a different period than the one described along with Figures 4-5 could be added to the antenna device, which may provide even more potential operating states depending on the frequencies. If the period of the third parasitic element were twice as long as the period of the first circuit, then the antenna would double its cycle and sequentially rotate through all four possible states (i.e., four because each of the two switching circuits has two states).

In addition, it is understood that aspects, features and benefits of the invention described herein are not unique applicable to, nor limited to, RFID networks, systems or devices. Many possibilities for implementing aspects and features of the invention described herein with other types of antenna devices and systems are possible.

Further, implementations with other types of antenna devices are highly likely due to many different properties and parameters of other types of antennas being possible, such as predetermined parameters for antenna patterns, polarizations, and frequency bands that could be implemented without adding any DC bias lines or DC biased feeds to operate the switches. For instance, aspects described herein could be used with various types of antennas including log periodic antennas and PCB antennas such as antennas known as YAGI antennas.

Further, it is understood that implementations of antenna devices and antenna device systems according to aspects and features of the invention are applicable to numerous and different types of technologies, industries, and devices. For example, an additional implementation not specifically discussed above can include repeatedly cycling through several operational states related to a Wi-Fi access point antenna in a building, such as mounted in a corner of a room, which can be configured to automatically and periodically "scan" the room based on aspects and features of the invention to steering its high gain beam in several possible directions. In another example possible implementation, implementations of aspects and features of the invention with reconfigurable antennas in an aircraft may be especially valuable for aircraft applications due to the lack of a requirement to provide antenna devices with external power.

These and other changes can be made to the invention in light of the above Detailed Description. While the above description describes certain examples, and describes the best mode contemplated, no matter how detailed the above appears in text, the invention can be practiced in many ways. Details of the system may vary considerably in its specific implementation, while still being encompassed by the invention disclosed herein. As noted above, particular terminology used when describing certain features or aspects of the invention should not be taken to imply that the terminology is being redefined herein to be restricted to any specific characteristics, features, or aspects of the invention with which that terminology is associated. In general, the terms used in the following claims should not be construed to limit the invention to the specific examples disclosed in the specification, unless the above Detailed Description section explicitly defines such terms. Accordingly, the actual scope of the invention encompasses not only the disclosed examples, but also all equivalent ways of practicing or implementing the invention under the claims.

### SELF-STEERING RFID TAGS EMBODIMENT

Described in detail below are example configurations of an antenna device for communicating on a wireless network, which is self-powered and self-steering, and operates efficiently without requiring complex controls and independent power sources. The antenna device includes a power harvester that obtains power from a wireless signal at the local antenna element and thereafter automatically performs operations without requiring control inputs or receiving external control data. As such, without needing to receive a control signal or control data, the antenna device is configured to be self-powered, to operate automatically as soon as it begins receiving power via the power harvester, and to be self-steering.

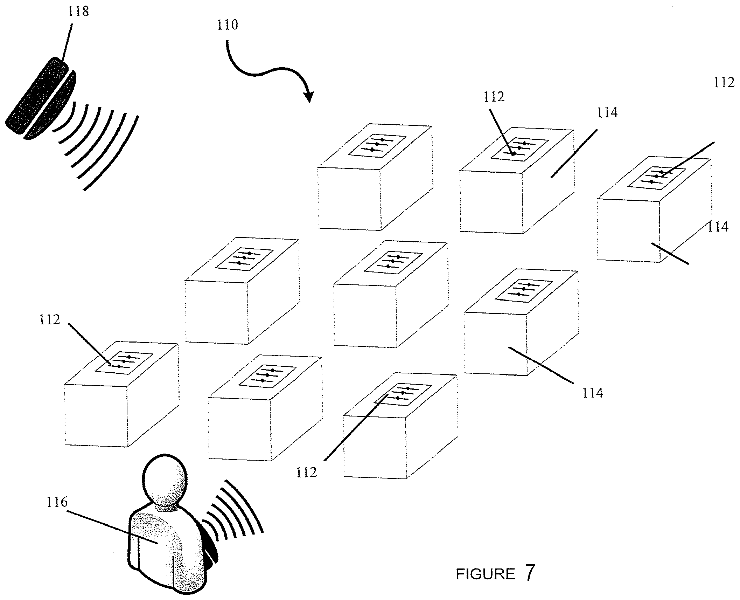

Referring now to Figure 7, an example arrangement 110 is shown of passive, self-steering RFID tags 112 performing operations in a warehouse/transportation environment. In such a common scenario, RFID tags 112 are placed on movable items that need to be tracked, such as boxes 114 being shipped. Of course, the operations, benefits and features of self-steering RFID tags and RFID tags in general could be described under numerous other scenarios and especially those involving movable items, such as asset tracking for a company, monitoring the usage and locations of military equipment and supplies, tracking natural phenomena like oceanic or atmospheric movements, etc., as well as more complex usages such as establishing ad-hoc network systems.

For the scenario shown in Fig. 7 and in most other scenarios involving RFID tags, good communications should exist between portable RFID tags 112 and other RFID devices like RFID reader 116, as well as with each other and with other network devices. Of course, communications between RFID tags 112 and RFID reader 116 is a communication relationship, since RFID technology was on the concept of RFID readers being able to quickly scan a RFID tag and have the tag return a reflected signal its identification information therein.

As such, it is beneficial to the overall system and its operations to enhance the effectiveness of communications between RFID tags 112 and their RFID readers 116. With respect to the scenario of Fig. 7, the item monitoring and tracking functions and other functions performed via RFID communications in warehouse network 110 would be enhanced via passive RFID devices 112 having the ability to self-improve their communications with RFID reader 116 and other devices on the system. Further, enhancing the effectiveness of communications using passive RFID tags can allow passive tags to replace many of the more expensive, complex active RFID tags.

The passive RFID tags 112 are configured to be self-steering with respect to their ability to act independently and for each device being able to self-guide its communications parameters and, in particular, to self-adjust its radiation pattern, to be focused toward RFID reader 116. However, doing so requires the passive (non-powered) RFID tags 112 to be powered and activated during these operations. As shown in Fig. 7, network 112 includes at least one unmodulated, constant waveform (CW) transmitter 118, which transmits a signal at a frequency that will be received by RFID tags 112 and harvested by a power harvester therein, so RFID tags 112 can 'wake up' and have power to perform automatic self-steering operations for communicating with RFID reader 116 and other appropriate devices. In addition, communications are also enhanced by providing wireless signals from an independent source 118 to power RFID tags 112, rather than the tags using a portion of the RFID reader signal 116 for power and thus, reducing the amount available for the reflected signal back to the RFID reader.

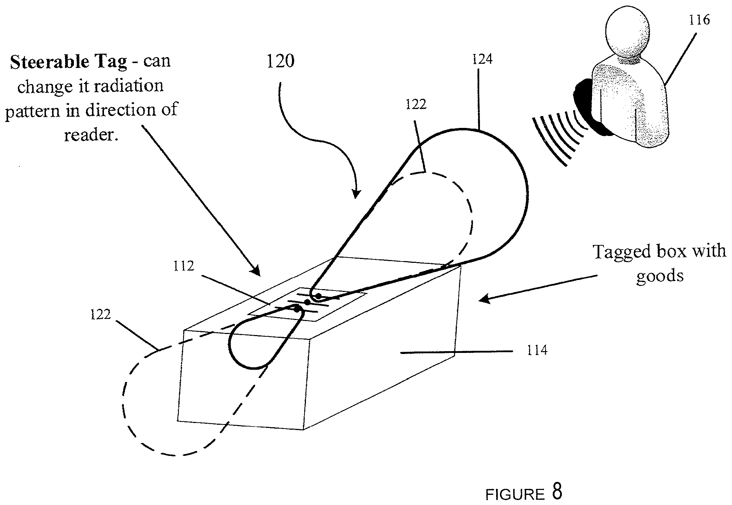

Figure 8 generally illustrates self-steering of the RFID tag's radiation pattern 120 toward RFID reader 116. Dashed lines 122 show the tag's default, symmetrical radiation pattern 122. Solid lines 124 show the tag's biased radiation pattern 124, which has modified to 'point' in the direction of RFID reader 116 and, thus, return messages to RFID reader 116 having a higher signal strength in the direction pointing toward RFID reader 116 than would be provided by the default radiation pattern 120.

In general, passive RFID self-adjustment of its radiation pattern can be accomplished by placing multiple passive antenna elements in regions around the main tag antenna, and then selectively activating combinations of the passive antenna elements to cffcctivcly 'shape' the radiation pattern of the main tag antenna. Various levels of controls, logic and input can be designed for determining the combinations of passive antenna elements to activate under what scenarios. However, simple, yet effective, determination mechanisms that can implemented in low-complexity, passive RFID tags relatively easily includes establishing automatic processes in the passive RFID tag to simply try various combinations of passive antenna elements and implement combinations that modify their radiation shape to improve their communications.

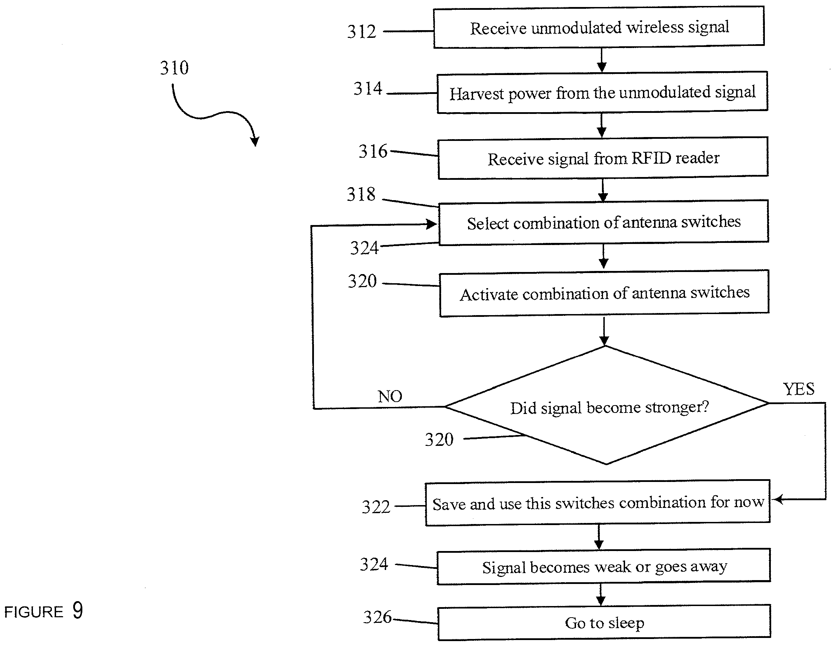

Referring now to Figure 9, a method 310 is shown for enhancing communications with another antenna device via modification with its radiation pattern. The method generally includes the step 312 of receiving an unmodulated wireless signal along with the step 314 of harvesting power from the unmodulated wireless signal to activate the antenna device and provide power for its operations. At some point, the antenna device performs the step 316 of receiving a signal having a first signal strength from another antenna device, such as RFID reader 116, for which it needs to identify the best combination of passive antenna elements to point its beam toward the sending device. As such, the RFID tag automatically, and without receiving control information to do so, selects a first combination of distributed antenna elements disposed about a peripheral region of the antenna device for forming a radiation pattern to enhance communications with the other antenna device.

Thereafter, RFID tag 112 performs the step 320 of activating the first combination of the distributed antenna elements followed by step 322 of comparing the first signal strength with a second signal strength for communicating with the other antenna device based on the first combination of distributed antenna elements to determine if the signal became stronger for the second signal. If the second signal strength is stronger, the RFID tag performs the step 322 saving and setting the first combination of distributed elements as the combination for communications with the RFID reader, and if not, it performs step 324 of selecting a second combination of the distributed antenna elements repeating steps again for the next combination.

As such, a passive RFID tag can be configured to try several switch combinations automatically when communicating with another device, such as another tag, a tag reader or a network component, and then to select/adopt the best combination of passive antenna elements it finds to point its radiation beam in the direction of the particular device. The RFID tag could be configured to immediately adopt a best option found for communicating with a particular device, such as immediately adopting each combination it tries that improves communications at time with communications are poor.

Alternatively, RFID tag could be configured to select the best option for steering communications toward a particular device after it has tested all combinations that would likely improve communications, which might be better suited for a relatively static situation in which a passive RFID tag will have communications with the same devices over a period of time, and communications are acceptable while testing the possible combinations. The best combination found could be the combination of passive antenna elements that maximize the received reader/other device signal, which is essentially "pointing" its main beam in the direction of the maximum reader signal as shown in the Fig. 8. However, there may be scenarios where point the beam toward the other device may not be the best option, such as if an obstacle intervened or partially blocks signals pointed directly toward the device.

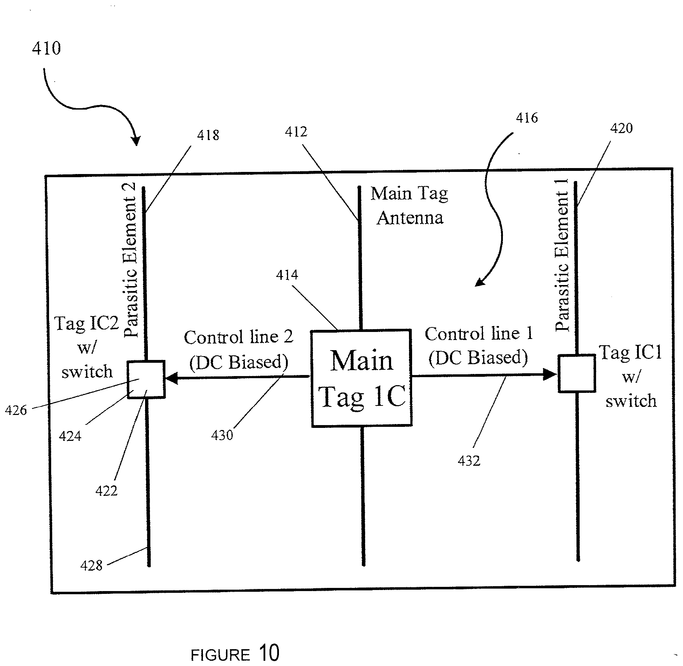

Referring now to Figure 10, in one configuration, the passive RFID tag 410 includes a Main Tag Antenna 412, a Main Tag integrated circuit (IC) 414, and a central circuit 416 connecting the Main Tag Antenna 412 and Main Tag IC 414. In addition, RFID tag 410 includes at least a pair of passive antenna elements 418, 420 at peripheral regions of the tag with main circuit disposed therebetween. The passive antenna elements 418 and 420 are configured as Parasitic Elements 418, 420, which each include a corresponding integrated circuit 422 including a controller 424 and switch 426 for driving the Element 428. In addition, RFID tag 410 includes several outputs 430, 432, which carry DC bias control signals to control switches 426 on passive elements 418, 420.

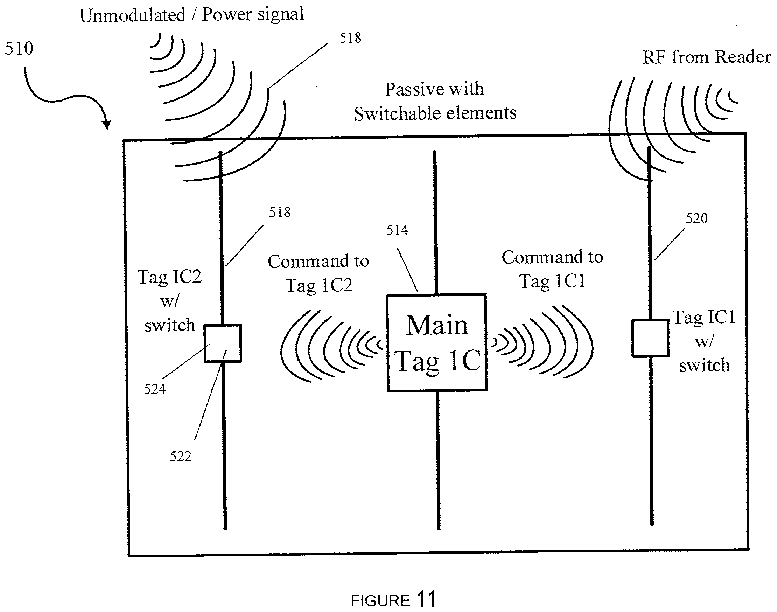

Referring now to Figure 11, another configuration of a RFID tag 510 is shown, which is configured as a passive RFID tag 112 discussed above along with Figures 7 and 8, in that the passive antenna elements 518, 520 are powered via an unmodulated signal transmitter 517 (118 in Fig. 7), from which power is harvested at Main Tag 514 and at the Element integrated circuits 522. RFID tag 510 is generally the same as RFID tag 410, except that Elements 518 and 520 are powered along with Main Tag 514 to initially turn on via the unmodulated signal 517, as well as to have power for operations while active. In addition, passive elements contain ICs with switches 524, which respond to the modulated commands from the main tag IC.

When the tag receives unmodulated RF CW signal from the reader, it powers both the main tag IC and those switches. Then then main tag IC can decide which switches to activate. When talking to such steerable tag, the reader may increase the length of the RF CW preamble (during which the tag is powered but not talking to the reader yet) in order to allow sufficient time for the tag to find out the best switches combination to maximize the signal.

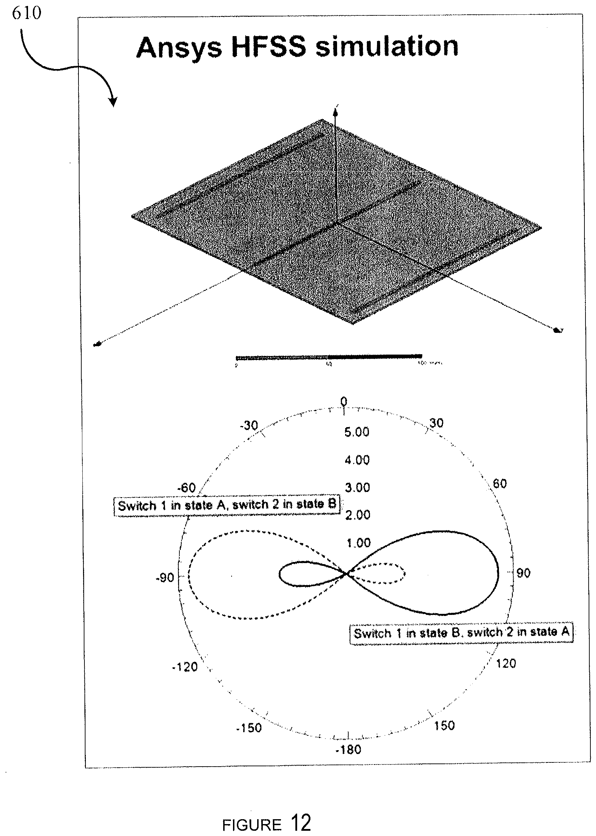

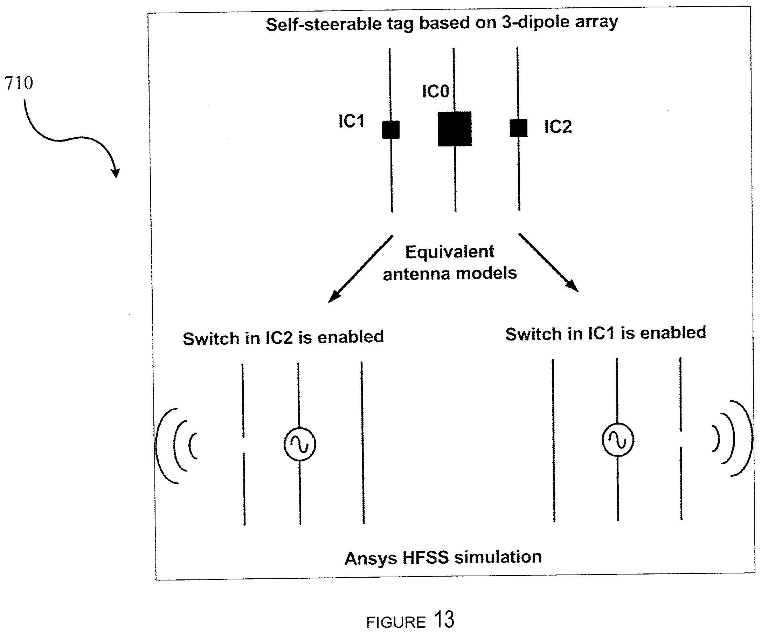

Figure 12 shows a calculated radiation pattern after steering has been performed via the self-steered RFID tags discussed along with Figures 7, 8, 10 and 11, which was also shown and discussed in more general terms along with Figure 8 for radiation patterns 122 and 124. Figure 13 shows a common Model 710 for a 3-dipole array model representing the RFID tag configurations discussed in detail along with Figures 7, 8, 10 and 11. Note that common model identifies communications between the main tag IC and the element IC as being performed via "equivalent antenna model" to accommodate differences between the tag shown in Fig. 11 and the one in Fig. 12.

Although the tags discussed thus far have only shown a pair of switchable elements, RFID tags can have multiple pairs of tags. Further, in order to shape the radiation pattern effectively, several pairs of elements should be provided around the peripheral region of the tag, and various combinations of elements may need to be combined. As such, it is understood that the tag can have multiple switchable elements. In addition to steering the beam, some of these antenna elements can be used to provide other benefits, such as to compensate for impedance mismatch due to tag environment (self-tuning with antenna elements rather than with variable inductors and capacitors inside the IC itself).

Another example of the self-steerable RFID tag 810 is shown in Figure 12, which shows multiple pairs of elements and additional features, such as two main antenna ports. As shown, the tag has three ICs: main IC, IC0, and two controllable ICs with switches: IC1 and IC2. The tag antenna itself is a symmetric three-element dipole antenna array similar to those discussed above. The elements of the array are printed copper traces, 3 mm wide and 127 mm long, spaced 75 mm apart on 60 mil FR4 substrate (permittivity 4.4), and the tag is designed to operate at 915 MHz Tag 810 was created and modeled using the simulation program known as Ansys HFSS.

In order to design tag 810, two impedance states of the switches were assumed as 30-j170 Ohm (switch OFF) and 10-j50 Ohm (switch ON), which are typical for RFID tag IC front ends with MOSFET modulating transistors. The XY-plane radiation pattern shown in Figure 12 was created via the same simulation and model, which shows that, depending on the state of the two switches, the antenna pattern can be steered by 180 degrees. The antenna max. gain is 5 dBi, and the front-to-back ration is about 3 db. To obtain higher gain and better front-to-back ratio, one can use antenna array with more elements (for example, five: two on each side of the main tag dipole).

It is understood that the self-steering RFID tags discussed herein can also include sensors and steer its beam according to different criteria (for example, it may sense the change in the environment and adapt to it). One very practical application of the proposed concept is tag networks where passive tags can directly talk to each other when powered by external RF signal. However, the passive tag-to-tag communication distance is currently limited to less than 1 ft. Nonetheless, having a higher gain self-steerable antenna on the tag would allow one to significantly increase this distance for better signal propagation through tag networks.

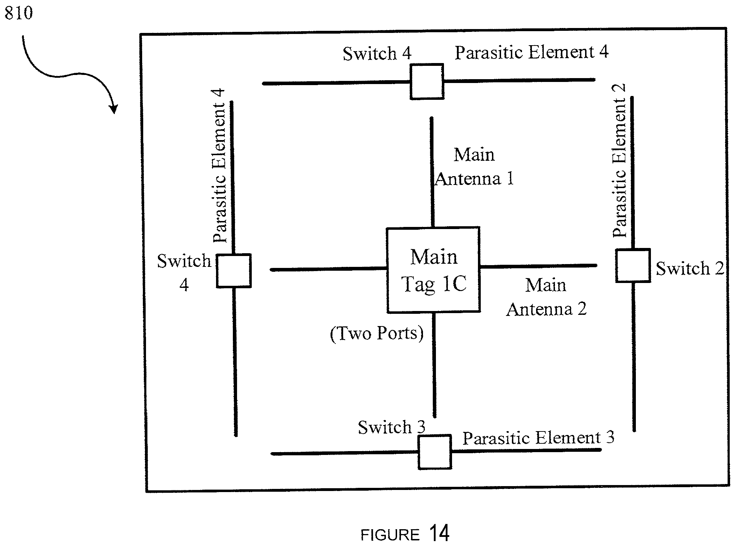

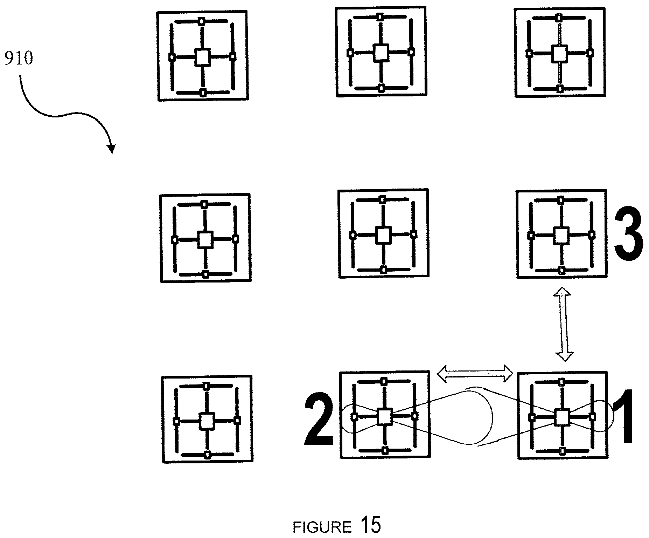

As an example, Figure 15 shows a 2-dimensional tag array of neighboring tags configured to "turn" their beams towards each other when talking to each other. For illustration purposes, the array generally matches a top view of the arrangement of items (boxes) shown in Figure for the warehouse environment example - except that the boxes have been eliminated and only the tags are shown. Further, the two element tags 110 shown in Fig. 7 have been replaced with tag 810 shown in Figure 14. Tags 910 such as these can have an IC with two RF ports connected to two orthogonal dipolcs, all surrounded by four parasitic elements with switches. As a result, the tag can steer its radiation pattern in any of the four directions (up, down, left, right). If more than one switch IC is enabled at a time, other directions are also possible (e.g. +/-45 and +/-135 degrees).

The modulation frequency can be manually changed my modifying the values of the variable resistor and capacitor in the circuit described above. As a result, the antenna radiation pattern switches between two states (two patterns) as shown in Figure 12. Operations of the antenna device 410 and corresponding circuit shown in Figs. 4 and 5 were confirmed via physical observations of a test device corresponding to the antenna device of Figs. 4 and 5. In addition to physical observation of the device during use, operations of a RF power sensor tag with LED sensors confirmed its operations including periodic illumination of LEDs on the test device for the appropriate periods and durations according to anticipated operations of the antenna device.

It is understood that additional antenna elements could be combined with the main first switch and the second switch controlling antenna elements as described above along with Figs. 4 and 5, which could provide antenna devices having even more parameter options during use. For example, a third parasitic antenna element (e.g., a dipole having its own oscillating circuit that oscillates at a different period than the one described along with Figs. 4 and 5 could be added to the antenna device, which may provide even more potential operating states depending on the frequencies. If the period of the third parasitic element were twice as long as the period of the first circuit, then the antenna would double its cycle and sequentially rotate through all four possible states (i.e., four because each of the two switching circuits has two states).

In addition, it is understood that aspects, features and benefits of the invention described herein are not unique applicable to, nor limited to, RFID networks, systems or devices. Many possibilities for implementing aspects and features of the invention described herein with other types of antenna devices and systems are possible. Further, implementations with other types of antenna devices are highly likely due to many different properties and parameters of other types of antennas being possible, such as predetermined parameters for antenna patterns, polarizations, and frequency bands that could be implemented without adding any DC bias lines or DC biased feeds to operate the switches.

Further, it is understood that implementations of antenna devices and antenna device systems according to aspects and features of the invention are applicable to numerous and different types of technologies, industries, and devices. For example, an additional implementation not specifically discussed above can include repeatedly cycling through several operational states related to a Wi-Fi access point antenna in a building, such as mounted in a corner of a room, which can be configured to automatically and periodically "scan" the room based on aspects and features of the invention to steering its high gain beam in several possible directions. In another example possible implementation, implementations of aspects and features of the invention with reconfigurable antennas in an aircraft may be especially valuable for aircraft applications due to the lack of a requirement to provide antenna devices with external power.

These and other changes can be made to the invention in light of the above Detailed Description. While the above description describes certain examples, and describes the best mode contemplated, no matter how detailed the above appears in text, the invention can be practiced in many ways. Details of the system may vary considerably in its specific implementation, while still being encompassed by the invention disclosed herein. As noted above, particular terminology used when describing certain features or aspects of the invention should not be taken to imply that the terminology is being redefined herein to be restricted to any specific characteristics, features, or aspects of the invention with which that terminology is associated. In general, the terms used in the following claims should not be construed to limit the invention to the specific examples disclosed in the specification, unless the above Detailed Description section explicitly defines such terms. Accordingly, the actual scope of the invention encompasses not only the disclosed examples, but also all equivalent ways of practicing or implementing the invention under the claims.

While certain aspects of the invention are presented below in certain claim forms, the applicant contemplates the various aspects of the invention in any number of claim forms.

The flowcharts and block diagrams in the Figures illustrate the architecture, functionality, and operation of possible implementations of systems and methods according to various embodiments. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware.

The terminology used herein is for the purpose of describing particular embodiments only and is not intended to be limiting of embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A passive, self-reconfigurable antenna device comprising:
at least one antenna element (12), comprising a first antenna (412) and a second antenna (420), configured to receive a modulated or an unmodulated wireless signal (105);
a power harvester (114) configured to obtain power from the modulated or unmodulated wireless signal (105); and
a first switch (14) coupled to the power harvester (114) and powered by the obtained power from the power harvester (114), the first switch (14) being configured to operate automatically when receiving the obtained power without requiring the receipt of control information, wherein the first switch (14) connects the first antenna (412) and the second antenna (420) when turned on in a first mode and disconnects the first antenna (412) from the second antenna (420) when turned off in a second mode, and the at least one antenna element (12) radiates resonantly in the first mode and does not radiate effectively in the second mode;
wherein the first switch (12) automatically operates according to a predetermined pattern when receiving the obtained power to modulate the at least one antenna element (12).

2. The antenna device of Claim 1, wherein the first antenna is an input dipole (412) and the second antenna is a reflector dipole (420).

3. The antenna device of Claim 1, further comprising:
a plurality of switchable antenna elements (20, 22) at least including:
a first switchable antenna element (20); and
a second switchable antenna element (22); and
a second switch powered by the received power when the first switch (14) is switched to a second position and is unpowered when the first switch (14) is switched to a first position,
wherein the second switch is configured to switch automatically between at least the first switchable antenna element (20) and the second switchable antenna element (22) when powered.

4. The antenna device of Claim 1, wherein the predetermined pattern of the first switch (14) is manually adjustable according to a hardware configuration of the first switch (14).

5. The antenna device of Claim 4, wherein the hardware configuration of the first switch (14) includes manually adjustable variable capacitors configured to permit manual adjustment of the predetermined pattern.

6. The antenna device of Claim 1, wherein the predetermined pattern of the first switch (14) includes a plurality of predetermined patterns.

7. The antenna device of Claim 6, wherein each of the plurality of predetermined patterns is associated with a different frequency of the modulated or unmodulated wireless signal (105).

8. The antenna device of Claim 6, wherein each of the plurality of predetermined patterns is associated with a different input power level of the modulated or unmodulated wireless signal (105).

9. The antenna device of Claim 1, wherein the at least one antenna element includes a plurality of antenna elements, the antenna device further comprising:
a second switch powered by the received power when the first switch is switched to a second position and is unpowered when the first switch is switched to a first position, the second switch being configured as a control module for automatically changing predetermined configurations of the plurality of antenna elements without requiring the receipt of control information.

10. A method carried out at an antenna device for enhancing communications with another antenna device with a radiation pattern, the method comprising:
receiving (312) an unmodulated wireless signal;
harvesting (314) power from the unmodulated wireless signal to activate the antenna device and provide power for its operations;
receiving (316) a signal having a first signal strength from another antenna device;
automatically and without receiving control information, selecting (318) a first combination of distributed antenna elements disposed about a peripheral region of the antenna device for forming a radiation pattern to enhance communications with the other antenna device;
activating (320) the first combination of the distributed antenna elements;
comparing (321) the first signal strength with a second signal strength for communicating with the other antenna device based on the first combination of distributed antenna elements;
if the second signal strength is stronger, set (322) the first combination of distributed elements as the combination for communications with the RFID reader, and if not, selecting (318) a second combination of the distributed antenna elements; and
activating (320) the second combination of the distributed antenna elements.

11. The method of Claim 10, wherein the distributed antenna elements include a first set of distributed antenna elements generally aligned in a first linear direction and a second set of distributed antenna elements generally aligned in a second linear direction oriented ninety degrees or more from the first linear direction, wherein selecting (318) the first combination of distributed antenna elements includes selecting one or more pairs aligned in the first linear direction without selecting pairs aligned in the second linear direction.

12. The method of Claim 11, wherein selecting (318) the second combination of distributed antenna elements includes selecting one or more pairs aligned in the first linear direction and one or more pairs aligned in the second linear direction.

13. The method of Claim 11, wherein the first set of distributed antenna elements generally aligned in a first linear direction are associated with first data for communicating with a first neighbor device discovered at a first location, and the second set of distributed antenna elements generally aligned in a second linear direction are associated with second data for communicating with a second neighbor device discovered at a second location different from the first location, the method further comprising:
sending the first data to the second device; and
sending the second data to the first device.

14. The method of Claim 10, further comprising:
receiving, from one of the first and the second device, third data for communicating with a third neighbor device at a third location; and
storing the third data in a memory device.

15. The method of Claim 10, wherein selecting (318) the first and second combinations of the distributed antenna elements includes selecting additional parameters for forming the radiation pattern including resonant frequency band parameters.

## Patentansprüche

1. Passive, selbstrekonfigurierbare Antennenvorrichtung, die umfasst:
mindestens ein Antennenelement (12), das eine erste Antenne (412) und eine zweite Antenne (420) um, die dazu konfiguriert, ein moduliertes oder ein unmoduliertes drahtloses Signal (105) zu empfangen;
einen Energy-Harvester (114), der dazu konfiguriert ist, Leistung aus dem modulierten oder unmodulierten drahtlosen Signal (105) zu empfangen; und
einen ersten Schalter (14), der mit dem Energy-Harvester (114) gekoppelt ist und durch die erhaltene Leistung von dem Energy-Harvester (114) bestromt wird, wobei der erste Schalter (14) dazu konfiguriert ist, automatisch zu arbeiten, wenn er die erhaltene Leistung empfängt, ohne den Empfang von Steuerinformationen zu erfordern, wobei der erste Schalter (14) die erste Antenne (412) und die zweite Antenne (420) verbindet, wenn er in einem ersten Modus eingeschaltet ist, und die erste Antenne (412) von der zweiten Antenne (420) trennt, wenn er in einem zweiten Modus ausgeschaltet ist, und das mindestens eine Antennenelement (12) in dem ersten Modus resonant strahlt und in dem zweiten Modus nicht effektiv strahlt;
wobei der erste Schalter (12) automatisch gemäß einem vorbestimmten Muster arbeitet, wenn er die erhaltene Leistung empfängt, um das mindestens eine Antennenelement (12) zu modulieren.

2. Antennenvorrichtung nach Anspruch 1, wobei die erste Antenne ein Eingangsdipol (412) und die zweite Antenne ein Reflektordipol (420) ist.

3. Antennenvorrichtung nach Anspruch 1, die weiter umfasst:
eine Vielzahl schaltbarer Antennenelemente (20, 22), die mindestens beinhalten:
ein erstes schaltbares Antennenelement (20); und
ein zweites schaltbares Antennenelement (22); und
einen zweiter Schalter, der von der empfangenen Leistung bestromt wird, wenn der erste Schalter (14) in eine zweite Position geschaltet wird, und nicht bestromt wird, wenn der erste Schalter (14) in eine erste Position geschaltet wird,
wobei der zweite Schalter dazu konfiguriert ist, automatisch zwischen mindestens dem ersten schaltbaren Antennenelement (20) und dem zweiten schaltbaren Antennenelement (22) umzuschalten, wenn er bestromt wird.

4. Antennenvorrichtung nach Anspruch 1, wobei das vorbestimmte Muster des ersten Schalters (14) gemäß einer Hardwarekonfiguration des ersten Schalters (14) manuell einstellbar ist.

5. Antennenvorrichtung nach Anspruch 4, wobei die Hardwarekonfiguration des ersten Schalters (14) manuell einstellbare variable Kondensatoren beinhaltet, die konfiguriert sind, um eine manuelle Einstellung des vorbestimmten Musters zu erlauben.

6. Antennenvorrichtung nach Anspruch 1, wobei das vorbestimmte Muster des ersten Schalters (14) eine Vielzahl vorbestimmter Muster beinhaltet.

7. Antennenvorrichtung nach Anspruch 6, wobei jedes der Vielzahl vorbestimmter Muster mit einer unterschiedlichen Frequenz des modulierten oder unmodulierten drahtlosen Signals (105) assoziiert ist.

8. Antennenvorrichtung nach Anspruch 6, wobei jedes der Vielzahl vorbestimmter Muster mit einem unterschiedlichen Eingangsleistungspegel des modulierten oder unmodulierten drahtlosen Signals (105) assoziiert ist.

9. Antennenvorrichtung nach Anspruch 1, wobei das mindestens eine Antennenelement eine Vielzahl von Antennenelementen beinhaltet, wobei die Antennenvorrichtung weiter umfasst:
einen zweiter Schalter, der von der empfangenen Leistung bestromt wird, wenn der erste Schalter in eine zweite Position geschaltet wird, und nicht bestromt wird, wenn der erste Schalter in eine erste Position geschaltet wird, wobei der zweite Schalter als ein Steuermodul zum automatischen Ändern vorbestimmter Konfigurationen der Vielzahl von Antennenelementen konfiguriert ist, ohne den Empfang von Steuerinformationen zu erfordern.

10. Verfahren, das an einer Antennenvorrichtung durchgeführt wird, um Kommunikationen mit einer anderen Antennenvorrichtung mit einem Strahlungsmuster zu verbessern, wobei das Verfahren umfasst:
Empfangen (312) eines unmodulierten drahtlosen Signals;
Harvesting (314) von Leistung aus dem unmodulierten drahtlosen Signal, um die Antennenvorrichtung zu aktivieren und Leistung für ihren Betrieb bereitzustellen;
Empfangen (316) eines Signals, das eine erste Signalstärke aufweist, von einer anderen Antennenvorrichtung;
automatisches und ohne Empfang von Steuerinformationen Auswählen (318) einer ersten Kombination verteilter Antennenelemente, die um einen Umfangsbereich der Antennenvorrichtung angeordnet sind, um ein Strahlungsmuster zu bilden, um Kommunikationen mit der anderen Antennenvorrichtung zu verbessern;
Aktivieren (320) der ersten Kombination der verteilten Antennenelemente;
Vergleichen (321) der ersten Signalstärke mit einer zweiten Signalstärke zum Kommunizieren mit der anderen Antennenvorrichtung basierend auf der ersten Kombination verteilter Antennenelemente;
falls die zweite Signalstärke stärker ist, Einstellen (322) der ersten Kombination verteilter Elemente als die Kombination für Kommunikationen mit dem RFID-Lesegerät, und falls nicht, Auswählen (318) einer zweiten Kombination der verteilten Antennenelemente; und
Aktivieren (320) der zweiten Kombination der verteilten Antennenelemente.

11. Verfahren nach Anspruch 10, wobei die verteilten Antennenelemente einen ersten Satz verteilter Antennenelemente, die im Allgemeinen in einer ersten linearen Richtung ausgerichtet sind, und einen zweiten Satz verteilter Antennenelemente, die im Allgemeinen in einer zweiten linearen Richtung ausgerichtet sind, die neunzig Grad oder mehr von der ersten linearen Richtung ausgerichtet ist, beinhalten, wobei das Auswählen (318) der ersten Kombination verteilter Antennenelemente das Auswählen eines oder mehrerer Paare, die in der ersten linearen Richtung ausgerichtet sind, ohne dass Paare ausgewählt werden, die in der zweiten linearen Richtung ausgerichtet sind, beinhaltet.

12. Verfahren nach Anspruch 11, wobei das Auswählen (318) der zweiten Kombination verteilter Antennenelemente das Auswählen eines oder mehrerer Paare, die in der ersten linearen Richtung ausgerichtet sind, und eines oder mehrerer Paare, die in der zweiten linearen Richtung ausgerichtet sind, beinhaltet.

13. Verfahren nach Anspruch 11, wobei der erste Satz verteilter Antennenelemente, die im Allgemeinen in einer ersten linearen Richtung ausgerichtet sind, mit ersten Daten zum Kommunizieren mit einer ersten Nachbarvorrichtung, die an einem ersten Ort entdeckt wurde, assoziiert sind, und der zweite Satz verteilter Antennenelemente, die im Allgemeinen in einer zweiten linearen Richtung ausgerichtet sind, mit zweiten Daten zum Kommunizieren mit einer zweiten Nachbarvorrichtung, die an einem zweiten Ort entdeckt wurde, der sich von dem ersten Ort unterscheidet, assoziiert sind, wobei das Verfahren weiter umfasst:
Senden der ersten Daten zu der zweiten Vorrichtung; und
Senden der zweiten Daten zu der ersten Vorrichtung.

14. Verfahren nach Anspruch 10, das ferner umfasst:
Empfangen, von einer der ersten und der zweiten Vorrichtung, dritter Daten zum Kommunizieren mit einer dritten Nachbarvorrichtung an einem dritten Ort; und
Speichern der dritten Daten in einer Speichervorrichtung.

15. Verfahren nach Anspruch 10, wobei das Auswählen (318) der ersten und zweiten Kombination der verteilten Antennenelemente das Auswählen zusätzlicher Parameter zum Bilden des Strahlungsmusters einschließlich Resonanzfrequenzbandparametern beinhaltet.

## Revendications

1. Dispositif d'antenne passif auto-reconfigurable comprenant :
au moins un élément d'antenne (12) comprenant une première antenne (412) et une seconde antenne (420), configuré pour recevoir un signal sans fil modulé ou non modulé (105) ;
un récupérateur d'énergie (114) configuré pour obtenir de l'énergie à partir du signal sans fil modulé ou non modulé (105) ; et
un premier commutateur (14) couplé au récupérateur d'énergie (114) et alimenté par l'énergie provenant du récupérateur d'énergie (114), le premier commutateur (14) étant configuré pour fonctionner automatiquement lors de la réception de l'énergie obtenue sans nécessiter la réception d'informations de commande, dans lequel le premier commutateur (14) connecte la première antenne (412) et la seconde antenne (420) lorsqu'il est allumé dans un premier mode et déconnecte la première antenne (412) de la seconde antenne (420) lorsqu'il est éteint dans un second mode et le au moins un élément d'antenne (12) émet des rayonnements en mode résonnant dans le premier mode et n'émet pas, en réalité, de rayonnements dans le second mode ;
dans lequel le premier commutateur (12) fonctionne automatiquement selon un diagramme prédéterminé lors de la réception de l'énergie obtenue pour moduler le au moins un élément d'antenne (12).

2. Dispositif d'antenne selon la revendication 1, dans lequel la première antenne est un dipôle d'entrée (412) et la seconde antenne est un dipôle réflecteur (420).

3. Dispositif d'antenne selon la revendication 1, comprenant en outre :
une pluralité d'éléments d'antenne commutables (20, 22) comprenant au moins :
un premier élément d'antenne commutable (20) ; et
un second élément d'antenne commutable (22) ; et
un second commutateur alimenté par l'énergie reçue lorsque le premier commutateur (14) est commuté dans une seconde position et non alimenté lorsque le premier commutateur (14) est commuté dans une première position,
dans lequel le second commutateur est configuré pour commuter automatiquement entre au moins le premier élément d'antenne commutable (20) et le second élément d'antenne commutable (22) lorsqu'il est alimenté.

4. Dispositif d'antenne selon la revendication 1, dans lequel le diagramme prédéterminé du premier commutateur (14) est réglable manuellement selon une configuration matérielle du premier commutateur (14).

5. Dispositif d'antenne selon la revendication 4, dans lequel la configuration matérielle du premier commutateur (14) comprend des condensateurs variables réglables manuellement, configurés pour permettre un réglage manuel du diagramme prédéterminé.

6. Dispositif d'antenne selon la revendication 1, dans lequel le diagramme prédéterminé du premier commutateur (14) comprend une pluralité de diagrammes prédéterminés.

7. Dispositif d'antenne selon la revendication 6, dans lequel chaque diagramme prédéterminé de la pluralité de diagrammes prédéterminés est associé à une fréquence différente du signal sans fil modulé ou non modulé (105).

8. Dispositif d'antenne selon la revendication 6, dans lequel chaque diagramme prédéterminé de la pluralité de diagrammes prédéterminé est associé à un niveau d'énergie d'entrée différent du signal sans fil modulé ou non modulé (105).

9. Dispositif d'antenne selon la revendication 1, dans lequel le au moins un élément d'antenne comprend une pluralité d'éléments d'antenne, le dispositif d'antenne comprenant en outre :
un second commutateur alimenté par l'énergie reçue lorsque le premier commutateur est commuté dans une seconde position et non alimenté lorsque le premier commutateur est commuté dans une première position, le second commutateur étant configuré comme un module de commande pour changer automatiquement des configurations prédéterminées de la pluralité d'éléments d'antenne sans nécessiter la réception d'informations de commande.

10. Procédé exécuté au niveau d'un dispositif d'antenne pour améliorer des communications avec un autre dispositif d'antenne avec un diagramme de rayonnement, le procédé comprenant :
la réception (312) d'un signal sans fil non modulé ;
la récupération (314) d'énergie en provenance du signal sans fil non modulé pour activer le dispositif d'antenne et fournir de l'énergie pour ses opérations ;
la réception (316) d'un signal ayant une première intensité de signal provenant d'un autre dispositif d'antenne ;
automatiquement et sans recevoir d'informations de commande, la sélection (318) d'une première combinaison d'éléments d'antenne distribués autour d'une région périphérique du dispositif d'antenne pour former un diagramme de rayonnement pour améliorer des communications avec l'autre dispositif d'antenne ;
l'activation (320) de la première combinaison des éléments d'antenne répartis ;
la comparaison (321) de la première intensité de signal à une seconde intensité de signal pour communiquer avec l'autre dispositif d'antenne sur la base de la première combinaison d'éléments d'antenne répartis ;
si la seconde intensité de signal est plus forte, la définition (322) de la première combinaison d'éléments répartis en tant que combinaison pour des communications avec le lecteur RFID et, dans le cas contraire, la sélection (318) d'une seconde combinaison des éléments d'antenne répartis ; et
l'activation (320) de la seconde combinaison des éléments d'antenne répartis.

11. Procédé selon la revendication 10, dans lequel les éléments d'antenne répartis comprennent un premier ensemble d'éléments d'antenne répartis généralement alignés dans une première direction linéaire et un second ensemble d'éléments d'antenne répartis généralement alignés dans une seconde direction linéaire orientée à quatre-vingt-dix degrés ou plus à partir de la première direction linéaire, dans lequel la sélection (318) de la première combinaison d'éléments d'antenne répartis comprend la sélection d'une ou plusieurs paires alignées dans la première direction linéaire sans sélectionner de paires alignées dans la seconde direction linéaire.

12. Procédé selon la revendication 11, dans lequel la sélection (318) de la seconde combinaison d'éléments d'antenne répartis comprend la sélection d'une ou plusieurs paires alignées dans la première direction linéaire et une ou plusieurs paires alignées dans la seconde direction linéaire.

13. Procédé selon la revendication 11, dans lequel le premier ensemble d'éléments d'antenne répartis généralement alignés dans une première direction linéaire est associé à des premières données pour communiquer avec un premier dispositif voisin découvert au niveau d'un premier emplacement et le second ensemble d'éléments d'antenne répartis généralement alignés dans une seconde direction linéaire est associé à des deuxièmes données pour communiquer avec un deuxième dispositif voisin découvert au niveau d'un deuxième emplacement différent du premier emplacement, le procédé comprenant en outre :
l'envoi des premières données au second dispositif ; et
l'envoi des deuxièmes données au premier dispositif.

14. Procédé selon la revendication 10, comprenant en outre :
la réception, en provenance d'un dispositif parmi le premier et le second dispositif, de troisièmes données pour communiquer avec un troisième dispositif voisin au niveau d'un troisième emplacement ; et
le stockage des troisièmes données dans un dispositif de mémoire.

15. Procédé selon la revendication 10, dans lequel la sélection (318) des première et seconde combinaisons des éléments d'antenne répartis comprend la sélection de paramètres supplémentaires pour former le diagramme de rayonnement comprenant des paramètres de bandes de fréquence de résonance.
